# EUROPEAN PATENT APPLICATION

(11) **EP 2 009 526 A2**
(43) Date of publication of application: **31.12.2008**
(21) Application number: 08252126.1
(22) Date of filing: 19.06.2008
(51) Int. Cl.: G05B 19/042, G05B 19/418

(54) **Control arrangement**

(30) Priority: 20.06.2007 GB 0711922
(71) Applicant: Goodrich Control Systems Ltd, Solihull B90 4LA (GB)
(72) Inventor: Shrimpling, Peter, Kingstanding, Birmingham B44 8JX (GB)
(74) Representative: Bailey, Richard Alan

(57) **Abstract**

An aerospace control arrangement comprising a control unit (10) connected to a plurality of connecting node sets (20a, 20b, 20c), each connecting node set (20a, 20b, 20c) having associated therewith a plurality of connecting nodes (20), and each node (20) having associated therewith at least one effecter (24) and/or sensor (28), resulting in at least some of the nodes (20) being connected to the control unit (10) in a fault isolated star, point to point, arrangement.

## Description

This invention relates to a control arrangement, for example, for use in controlling the operation of an aircraft engine. It may, however, be suitable for use in other applications or environments.

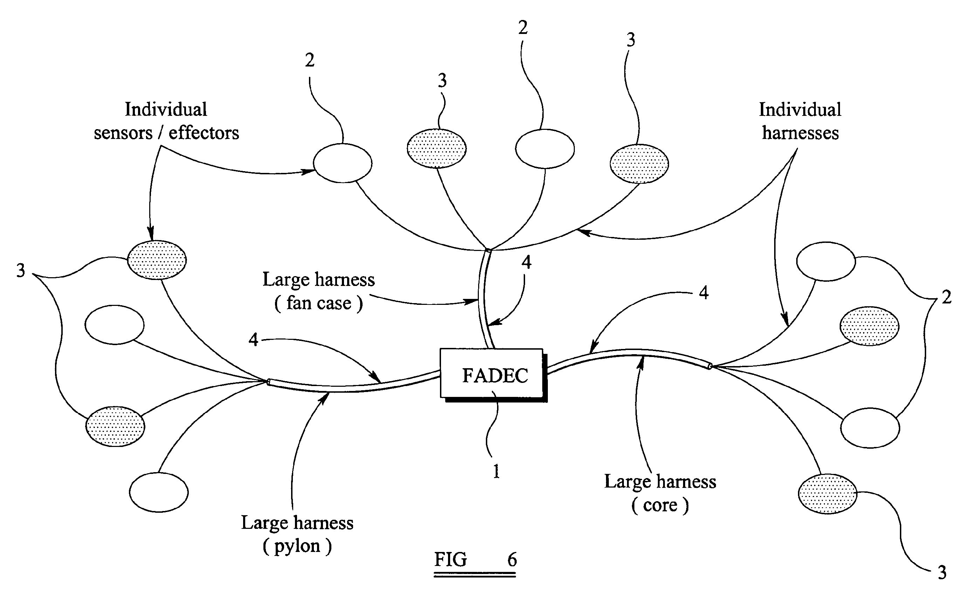

The control arrangement typically used in controlling the operation of an aircraft engine is a centralised arrangement (see Figure 6) and includes a control unit 1, for example in the form of a full authority digital engine controller (FADEC). A number of sensors 2 are connected to the control unit 1 to provide the control unit 1 with data representative of the operating conditions and parameters of the engine with which the control unit 1 is being used. Also connected to the control unit 1 is a plurality of devices, for example in the form of valves, actuators or other components referred to hereinafter as effecters 3, used in controlling the operation of the engine. The control unit 1 controls the operation of the effecters 3, and hence the engine, in accordance with programmed control algorithms and using the data received from the sensors 2.

Many of the sensors 2 and effectors 3 are located remotely from the control unit 1 and are connected thereto by wires, cables or other conductors, generally referred to as harnesses 4.

As a large number of sensors 2 and effecters 3 are typically provided, the harnesses 4 used are typically relatively complex, requiring a large number of individual conductors, each of which needs to be correctly connected to the control unit. By way of example, 700 or more conductors and associated connectors are typically required. It will be appreciated that such harnesses are relatively large, complex and heavy.

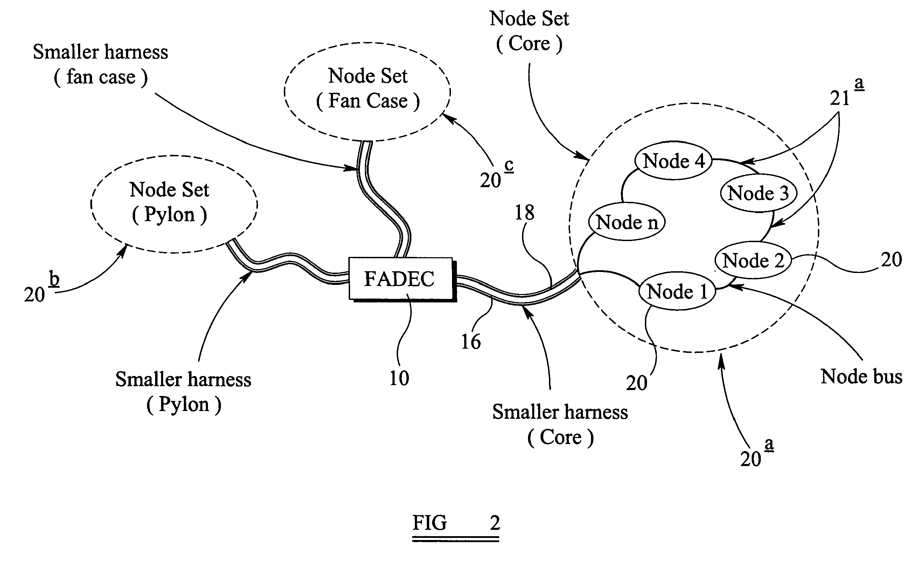

Rather than separately connecting each effecter and each sensor to the control unit as in such a centralised arrangement, it is known to provide distributed arrangements (see Figure 2) in which the effecters and sensors are apportioned into individual subsystems, known as nodes, that each provide a specific functionality associated with the control arrangement. Several connecting buses are connected to the control unit, each bus having connected thereto a particular set of nodes, also referred to as a node set. For example, three buses may be provided, one providing connections to pylon located set of nodes, one providing connections to core located set of nodes, and one providing connections to fan case located set of nodes. The individual nodes associated with each set of nodes and connecting bus are connected thereto in series.

The use -of such a distributed arrangement is advantageous in that the harnesses connected to the control unit are simplified, including fewer conductors, and are thus of reduced weight and size. Further, the number of connections, and hence the number of required connection pins, to the control unit is reduced. The use of such a distributed arrangement does not significantly alter the software associated with the control unit.

Although advantageous compared to a centralised system, such a distributed arrangement still has disadvantages. For example, the series connections of the effecters and sensors associated with each bus lead to difficulties in identifying or diagnosing the occurrence of faults and in effectively providing lightning strike protection (LSP). Further, bandwidth capacity problems may be encountered, limiting the speed of data transmission to or from at least some of the nodes, which in turn can limit the number of available nodes and have a detrimental affect on system flexibility.

It is an object of the present invention to provide an alternative control arrangement in which at least some of the disadvantages outlined hereinbefore are reduced.

According to the present invention there is provided an aerospace control arrangement comprising a control unit connected to a plurality of connecting node sets, each connecting node set having associated therewith a plurality of connecting nodes, and each node having associated therewith at least one effecter and/or sensor, resulting in at least some of the nodes being connected to the control unit in a fault isolated star, point to point, arrangement.

The use of such a control arrangement in an aerospace environment in which the arrangement, or at least part thereof, is exposed to high temperature conditions and/or significant vibrations would not be thought to be practical as the circuits incorporated into the nodes would most likely be incapable of withstanding the adverse environmental conditions.

Preferably, a plurality of effectors and/or sensors are associated with each node.

Such a fault isolated star, or point-to-point, connection arrangement enhances the ability of the control arrangement to detect and isolate an electrical/electronic failure condition, such as an open circuit or short circuit fault, in the control unit, an individual node, an individual effecter and/or sensor or associated harness. Further, bandwidth capacity limitations affecting data transfer to or from the control unit and individual nodes are alleviated as separate connections between the control unit and individual nodes are provided. Further, LSP can be incorporated into the design of each individual node, which enhances the overall lightning strike capability of the control arrangement. The advantages or benefits outlined hereinbefore of a conventional distributed arrangement are also maintained.

The harnesses used to connect each individual node to the control unit conveniently include power supply lines and means for transmitting data between the control unit and the node. The data transmission means may include separate data links. Alternatively, data may be transmitted over the power supply lines. Separate relatively high and low voltage, for example 40V and 12V, power supply lines may be provided. Alternatively, just relatively high voltage, for example 40V, power supply lines may be provided, a balanced DC to DC device or arrangement being incorporated in the node to provide a relatively low voltage, for example 12V, power supply. As a further alternative, just relatively low voltage, for example 12V, power supply lines may be provided, negating the need for the aforementioned DC to DC device: It will be appreciated that the use of such arrangements permits a reduction in the number of conductors required in the harness. For example, six, four or even just two conductor harnesses may be used. The number of connections to the control unit are thus reduced. Consequently, it may be possible to provide a triplex, rather than the more typical duplex, system architecture without requiring the control arrangement to be of overly complex form, or resulting in a significant harness weight penalty. Alternatively, it may be possible to provide a local triplex architecture in a critical node of the system. Furthermore, it is recognised that with the use of a relatively low voltage power supply line, for example 12V, the effectors and/or sensors need to be redesigned to operate at the lower voltage. Advantageously, if the physical size of these fine wire devices remains unchanged then with this lower voltage the diameter of the wires can be increased to provide a more robust and reliable device.

Preferably, each individual node includes control circuitry for each associated sensor and/or effecter. By providing the control circuitry remotely of the control unit, the control unit can be of less complex form. Further, if changes to the control circuitry are required, they can be -achieved without requiring changes to the entire control unit. Conveniently the control unit can be designed to allow changes in the numbers of nodes or control circuits to be accommodated. Again, this may allow design changes to be incorporated without requiring the control unit to be modified.

The control circuitry is preferably constructed in the form of a multi-chip module (MCM). The MCM conveniently includes silicon on insulator (SOI) based integrated circuits (ICs) mounted upon a multilayer substrate and located within a hermetically sealed housing. Such a module is advantageous in that its capability to withstand high temperature operating conditions and thermal cycles, as occur in aerospace applications, is good. Further, the so called Physics of Failure (P of F) of such a module that consists of SOI based ICs, is more easily understood that the P of F of a conventional complementary metal oxide semiconductor (CMOS) IC. Hence the wear out mechanisms and operational lifespan of these modules can be predicted more easily, thereby allowing planned maintenance or replacement to be undertaken more effectively. The control circuitry in each individual node preferably makes use of state machines rather than microprocessors, high temperature SOI state machines being known which can operate reliably in high temperature environments. A high temperature SOI state machine adapted for use in a high temperature environment, for example at around 200°C, is described in US7017662.

The invention will further be described, by way of example, with reference to the accompanying drawings, in which:
Figure 1 is a diagrammatic view illustrating a control arrangement in accordance with one embodiment of the invention;
Figure 2 illustrates a known distributed control arrangement;
Figure 3 illustrates a distributed arrangement in accordance with the invention;
Figure 4 is a diagram illustrating the data and power connections between parts of the control arrangement;
Figure 5 is a diagrammatic view illustrating part of the control arrangement; and
Figure 6 is a diagrammatic view illustrating another form of known arrangement.

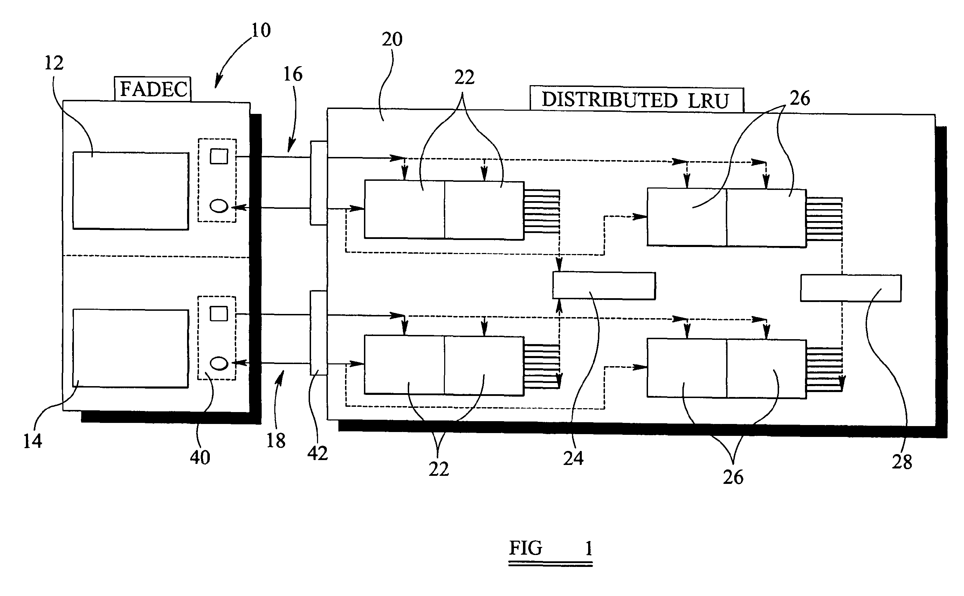

Referring firstly to Figure 1 there is illustrated a control arrangement in accordance with one embodiment of the invention. The control arrangement comprises a control unit 10 in the form of a full authority digital engine controller (FADEC). The control unit 10 is a dual channel or lane unit, having a first processor 12 processing sensor data and controlling a series of effecters, and a second processor 14 operating in parallel with the first processor 12. The use of dual lane control units is well known in providing the required level of system availability on safety critical applications such as aerospace engines and will not be described in further detail.

The control unit 10 is connected by wiring harnesses 16, 18 to a node 20 in the form of a line replaceable unit (LRU) containing control circuits 22 for controlling the operation of a series of valves, actuators or other forms of effecter 24 for use in controlling the operation of an associated engine, and sensor circuits 26 controlling and sensing the outputs of a series of sensors 28 arranged to monitor the operation of the engine, components associated therewith or the conditions under which the engine is operating. Both the effecters 24 and sensors 28 are electrically integrated into the design of the node 20. The node 20 receives electrical power from the control unit 10 through the harnesses 16, 18 and data or control signals are transmitted through the harnesses 16, 18 between the control unit 10 and the node 20 such that signal data from the sensor circuits 26 can be supplied to the control unit 10 for use thereby in producing control signals which are used by the control circuits 22 in controlling the operation of the effecters 24, and hence the operation of the engine. It will be understood that, if desired, the control circuits 22 and sensor circuits 26 in each lane can be combined into single circuits that provide a simplified single loop control arrangement within each lane of the LRU.

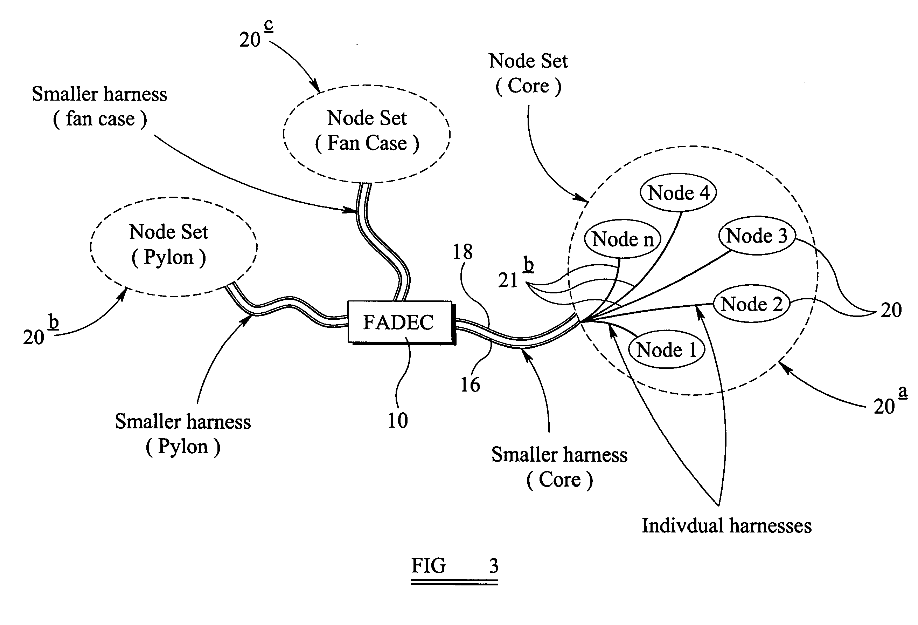

Figure 2 illustrates a known distributed control arrangement including a control unit 10 and a plurality of nodes 20, in this case being arranged in three node sets 20a, 20b, 20c, according to their location on the engine, as described hereinbefore. It is clear from Figure 2 that the individual nodes 20 associated with each node set 20a, 20b, 20c are connected to one another in series by sub-harnesses 21a. Two sets of series connections are provided, one being associated with each lane or channel of the control unit 10. As described hereinbefore, such connection of distributed nodes has advantages over centralised control arrangements (of the type shown in Figure 6), but is still disadvantageous. In contrast, in accordance with the present invention, as shown in Figure 3, the individual nodes 20 in each node set 20a, 20b, 20c are connected in a fault isolated star, point to point, arrangement with the control unit 10 by sub-harnesses 21b. This is advantageous in that, as with other distributed arrangements, the harnesses 16, 18 are of relatively simple, compact and low weight form. The control unit 10 is further of relatively simple form and only relatively few connections need to be made thereto.

The point to point distributed arrangement of the present invention has the additional benefit of providing enhanced fault management capabilities. The occurrence of electrical/electronic failure conditions, such as an open circuit or a short circuit fault, in the control unit 10, the individual nodes 20, the individual sensors and/or effectors or the associated harnesses 16, 18 and sub-harnesses 21b can be readily detected, isolated and accommodated with minimal disruption to the ability of the control arrangement to perform its desired functionality.

Further, the use of point to point connections between the control unit 10 and the individual nodes 20 ensures that the usage of the available communications bandwidth is optimised, hence providing for improved data transmission rates.

Another benefit is that LSP functionality can be incorporated- into the design of each individual node 20 in the form of a LSP MCM 42 (Figure 1). This provides for an improved lightning strike management capability when compared with conventional centralised arrangements in which all of the LSP is incorporated into the design of the FADEC.

Furthermore, it is recognised that with the increasing use of composite materials in modem aerospace engines, the energy sink available to provide adequate protection for the increasing number of micro-electronic devices in engine mounted safety critical systems is diminishing. Hence the need to provide a distributed system with individual nodes having integrated LSP functionality.

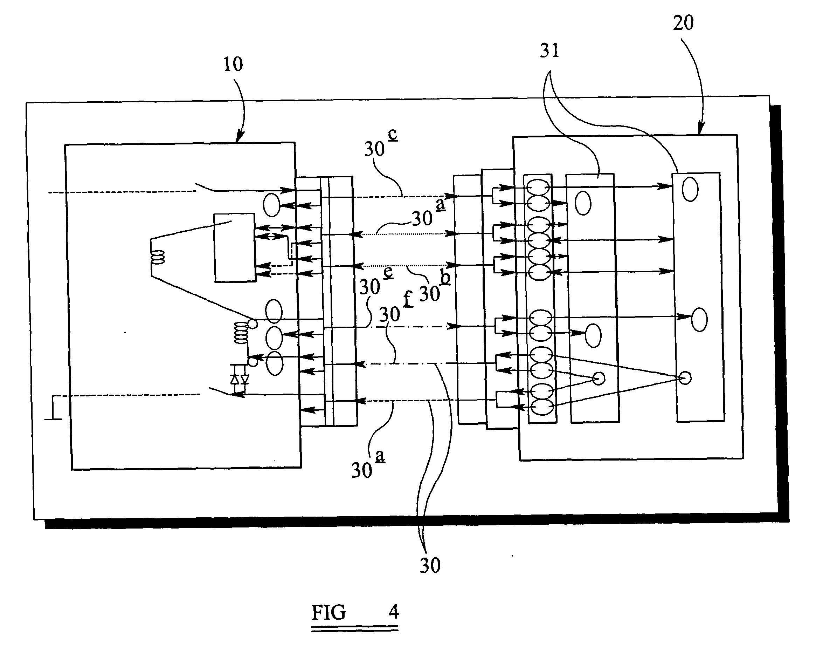

Figure 4 illustrates, diagrammatically, the nature of one form of the harness 16; 18 and sub-harness 21b arrangement providing the connection between the control unit 10 and one of the nodes 20. This harness 16, 18 and sub-harness 21b arrangement is made up of six conductors 30. Of the conductors 30, two (30a, 30b) provide a serial data link, two (30c, 30d) provide a relatively high voltage, for example 40V, power supply connection to the node 20, and two (30e, 30f) provide a relatively low voltage, for example 12V, power supply connection to the node 20. Within the node 20, the power supplies and serial data links are split so as to connect the control unit 10 to the various control circuits 22 and sensor circuits 26 integrated into the design of the node 20 (Figure 1).

Figure 4 illustrates the connection of the power supplies and serial data links into two separate processing circuits 31 located within the node 20. Each control circuit 22 or sensor circuit 26 or combination thereof within each node 20 incorporates two such processing circuits 31. This is advantageous in that each pair of processing circuits 31 can be arranged to operate in parallel, thereby providing signal validation and cross-checking functionality internal to each individual node. This additional functionality effectively provides a closed loop fault diagnostic arrangement for each distributed node 20 and associated arrangement of harnesses 16, 18 and sub-harness 21b, and hence enhances the ability of the control arrangement to detect, isolate and accommodate faults in the control unit 10, distributed node 20 or associated arrangement of harnesses 16, 18 and sub-harness 21b. In conjunction with the above, the respective power/serial management MCMs 40 in the control unit 10 (Figure 1) are used to complete this closed loop fault diagnostic arrangement for each respective distributed node 20 and associated arrangement of harnesses 16, 18 sub-harness 21b.

Although Figure 4 illustrates a six conductor harness, in accordance with the invention the number of conductors may be reduced. For example, it may be possible to use the power lines to transmit the data signals as well as supplying electrical power to the node 20, thereby avoiding having to provide specific serial data lines. Further, it may be possible to provide the node 20 with a balanced DC-DC device whereby a relatively -low voltage, for example 12V, power supply can be derived from a higher voltage supply, thereby avoiding having to provide specific low voltage power supply lines in the harness. As a further alternative, it may be possible to provide just relatively low voltage, for example 12V, power lines. It will be appreciated, therefore, that the number of conductors in the harness may be reduced from six to just four or even just two. Clearly, the further reduction in the number of conductors required in the arrangement of harnesses 16, 18 and sub-harness 21b assists by further reducing the size and weight thereof, and the number of connections which must be made to the control unit 10 is correspondingly reduced. The design of the control unit 10 can also be simplified as fewer connection pins are required thereon. Where just a 12V power supply is provided, some sensors and/or effectors may require modification. If the physical size of these fine wire components is unchanged, the wire diameter may be increased thereby providing devices of improved robustness and reliablility.

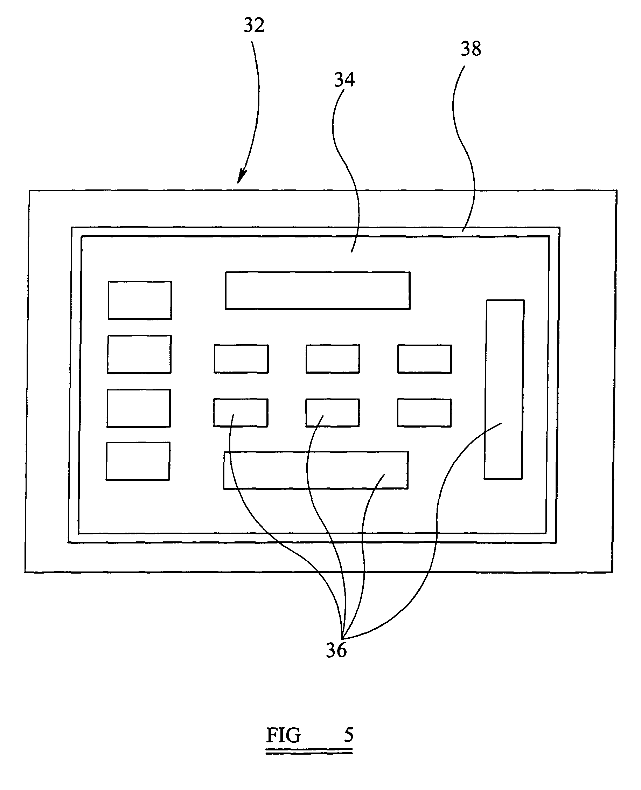

The control and sensor circuits 22, 26 or combination thereof are preferably incorporated into multi-chip modules (MCMs) 32. Similarly, MCMs may be used to provide LSP circuitry, and in the serial data line and power line management circuits, and in the control unit 10. Each MCM 32, as illustrated in Figure 5, comprises a multi layered ceramic, for example aluminium nitride, substrate 34 upon which is mounted a number of processing, memory and ancillary function chips 36. Preferably, the processing function in each MCM 32 makes use of state machines rather than microprocessors. Although non-volatile memory is used in the calibration, fault code store and prognostic functions in the high temperature nodes, the utilised memory capacity that has been proven at high temperatures is such that if applied to the processing function in each MCM a significant number of micro-processing devices would be required to provide the necessary processing functionality. This would incur significant cost and weight penalties when compared with the preferred utilisation of state machines. The state machine is designed specifically for use in safety critical applications, and is incorporated into the MCM 32 in the form of an Application Specific Integrated Circuit (ASIC), or Field Programmable Gate Array (FPGA), both of which are well known in the art. The processing function design is defined using the high level hardware design language VHDL, and can therefore be easily ported to different ASICs or FPGAs thus making it free from future obsolescence. Each MCM 32 is connected to the associated circuitry within the node 20 by a parallel bus or using serial communications buses. Where used as part of the control circuit 22, the MCM 32 conveniently incorporates an inductive drive arrangement, that is preferably reconfigurable so that it can be used as the drive arrangement for a number of different effecters 24 that are incorporated into each node 20, for example, solenoid, torque motor and stepper -motor drives. The integration of these inductive drive arrangements in the design of the HTSOI MCMs 32 in each individual node 20, enables their use in high temperature operating environments such as the engine core. Where used as part of the sensor circuit 26, the MCM 32 is preferably suitable for use with position sensors, temperature sensors, fuel flow monitoring, and vibration and/or pressure monitoring.

The processing function 36 conveniently makes use of HTSOI wafer technology to provide state machines capable of operating reliably at high temperatures, as occur in aircraft engine operating environments. Such SOI components differ from conventional silicon based devices in that the silicon junction is located above an electrical insulator. The insulator materials used include silicon dioxide and sapphire, sapphire being used in radiation sensitive applications and silicon dioxide being preferred where improved performance is required.

The MCM 32 including HTSOI components is hermetically sealed in a nitrogen environment within a housing 38. The multilayered substrate 34 of the MCM 32 conveniently includes, for example, fourteen layers and has, for example, embedded tungsten tracks. The substrate is preferably double-sided. Matched metal wire bonds, of short length, are used to provide electrical connections within the MCM 32. Such a device is, as described hereinbefore, particularly suitable for use in high temperature environments. Further, the operating characteristics and abilities of the MCM 32 to withstand adverse operating conditions, in particular the high operating temperatures, can be derived, thereby allowing planned maintenance or replacement thereof to be undertaken as the likelihood of failure and conditions causing failure, hereinbefore referred to as the Physics of Failure, are well understood. Conveniently each node 20 incorporates a temperature sensor, the output of which can be used in a suitable prognosis scheme/algorithm for each MCM 32, which enables determination of when to replace one or more of the MCMs 32 before failure occurs. It can also be used to monitor any drift associated with corresponding- node sensor outputs and hence be used to facilitate the re-calibration of these sensor outputs by the processing function incorporated into the corresponding MCM 32.

As outlined hereinbefore, the MCMs 32 are configurable for use in a range of functions within the control arrangement. One advantage of the use of such modules is that modifications can be made to the control arrangement without having to replace the entire control unit 10, but rather just one or more of the MCMs 32 can be replaced. Further, maintenance operations may be quicker and easier to perform, and the replacement of obsolete components can be achieved relatively easily. As modifications can be made by simply replacing or reconfiguring one or more of the MCMs 32, it may be possible to introduce modifications to the control arrangement in a timely manner without having to seek repeated approval or certification for each changed component. Further, tailoring of the control arrangement to suit specific applications is possible. In order to accommodate changes to the control arrangement, it may be desirable to incorporate additional harness channels in the control unit 10 and/or nodes 20 so as to allow expansion of the number of nodes 20 and/or sensors in order to meet future application requirements.

The MCMs 32 are of compact form, the double sided nature thereof enhancing the compactness, and the sealing of the components thereof in a nitrogen environment enables the MCMs 32 to remain operative over an extended period of time, at both high and low temperature conditions.

It will be appreciated that a large number of modifications and alterations to the arrangement described hereinbefore are possible without departing from the scope of the invention.

## Claims

1. An aerospace control arrangement comprising a control unit (10) connected to a plurality of connecting -node sets 20a, 20b, 20c), each connecting node set (20a, 20b, 20c) having associated therewith a plurality of connecting nodes (20), and each node (20) having associated therewith at least one effecter (24) and/or sensor (28), resulting in at least some of the nodes (20) being connected to the control unit (10) in a fault isolated star, point to point, arrangement.

2. An arrangement according to Claim 1, wherein a plurality of effectors (24) and/or sensors (28) are associated with each node (20).

3. An arrangement according to Claim 1 or Claim 2, wherein each node set (20a, 20b, 20c) is connected to the control unit (10) by a harness arrangement (16, 18, 21b) including power supply lines and means for transmitting data.

4. An arrangement according to Claim 3, wherein the -data transmission means includes separate data links.

5. An arrangement according to Claim 3, wherein the data transmission means comprises means for transmitting data over the power supply lines.

6. An arrangement according to any of Claims 3 to 5, wherein separate relatively high and low voltage power supply lines are provided.

7. An arrangement according to any of Claims 3 to 5, wherein just relatively high voltage power supply lines are provided, a balanced DC to DC device or arrangement being incorporated in the node to provide a relatively low voltage power supply.

8. An arrangement according to any of Claims 3 to 5, wherein just relatively low voltage power supply lines are provided.

9. An arrangement according to any of the preceding claims, wherein a triplex system architecture is provided.

10. An arrangement according to any of the preceding claims, wherein each individual node (20) includes control circuitry (22, 26) for each associated sensor (28) and/or effecter (24).

11. An arrangement according to Claim 10, wherein the control circuitry (22, 26) is constructed in the form of a multi-chip module (MCM) (32).

12. An arrangement according to Claim 11, wherein the MCM (32) includes silicon on insulator (SOI) based integrated circuits (ICs) mounted upon a multilayer substrate (34) and located within a hermetically sealed housing (38).

13. An arrangement according to any of Claims 10 to 12, where the control circuitry (22, 26) in each individual node (20) makes use of state machines.
